# EUROPEAN PATENT SPECIFICATION

(11) **EP 4 609 359 B1**
(45) Date of publication and mention of the grant of the patent: **02.09.2026**
(21) Application number: 24821839.8
(22) Date of filing: 09.12.2024
(51) Int. Cl.: G06T 11/00

(54) **GENERATING PHOTOMOSAICS USING IMAGE GENERATION NEURAL NETWORKS**
ERZEUGUNG VON PHOTOMOSAIKS UNTER VERWENDUNG NEURONALER NETZE
GÉNÉRATION DE PHOTOMOSAÏQUES À L'AIDE DE RÉSEAUX NEURONAUX

(30) Priority: 08.12.2023 US 202363608069 P
(43) Date of publication of application: 03.09.2025
(73) Proprietor: GDM Holding LLC, Mountain View, CA 94043 (US)
(72) Inventor: TOOR, Andeep Singh, Mountain View, California 94043 (US); VAN DEN OORD, Aaron Gerard Antonius, London N1C 4AG (GB); BLOK, Irina, Mountain View, California 94043 (US); MICAL, Robert Joseph, Mountain View, California 94043 (US); RAMESH, Anusha, Sunnyvale, California 94086 (US); MAHDAVI, Seyedeh Sara, Toronto, Ontario M5H 2G4 (CA); QI, Hang, Mountain View, California 94043 (US)
(74) Representative: Marks & Clerk GST
(86) International application number: PCT/EP2024/085352
(87) International publication number: WO 2025/120239

(56) References cited:
- US-A1- 2020 265 553
- FUJISAWA MAKOTO FUJIS@SLIS TSUKUBA AC JP ET AL: "Interactive photomosaic system using GPU", PROCEEDINGS OF THE 26TH ANNUAL ACM SYMPOSIUM ON USER INTERFACE SOFTWARE AND TECHNOLOGY, UIST '13, ACM PRESS, NEW YORK, NEW YORK, USA, 29 October 2012 (2012-10-29), pages 1297 - 1298, XP058500850, ISBN: 978-1-4503-2268-3, DOI: 10.1145/2393347.2396451
- NIKOLAY JETCHEV ET AL: "GANosaic: Mosaic Creation with Generative Texture Manifolds", ARXIV.ORG, CORNELL UNIVERSITY LIBRARY, 201 OLIN LIBRARY CORNELL UNIVERSITY ITHACA, NY 14853, 1 December 2017 (2017-12-01), XP080843820

## Description

### CROSS-REFERENCE TO RELATED APPLICATION

This application claims priority to U.S. Provisional Application No. 63/608,069, filed on December 8, 2023. The disclosure of the prior application is considered part of and is incorporated by reference in the disclosure of this application.

### BACKGROUND

This specification relates to processing images using machine learning models.

As one example, neural networks are machine learning models that employ one or more layers of nonlinear units to predict an output for a received input. Some neural networks include one or more hidden layers in addition to an output layer. The output of each hidden layer is used as input to another layer in the network, e.g., the next hidden layer or the output layer. Each layer of the network generates an output from a received input in accordance with current values of a respective set of weights.

Fujisawa et al., "Interactive photomosaic system using GPU", MM '12: Proceedings of the 20th ACM international conference on Multimedia, Pages 1297 - 1298 (2012) describes photomosaic generation by subdividing an input image into patches and searching for matching tiles in a tile database using color vectors stored in an Approximate Nearest Neighbor Kd-tree.

US2020/265553 describes creating a mosaic image based on an image tagword.Jetchev et al., "GANosaic: Mosaic Creation with Generative Texture Manifolds", arXiv:1712.00269 (2017), describes using convolutional neural networks to generate smooth (without any visible borders) mosaic images which morph and blend different textures locally.

### SUMMARY

The invention is defined by the appended claims.

This specification describes a system implemented as one or more computer programs on one or more computers that generates a photomosaic of an input image or an input video using a text and image conditioned generative neural network.

According to one aspect, there is provided a method performed by one or more computers. The method comprises: receiving an input comprising a source image and, for each of a plurality of patches of the source image, one or more respective text descriptions for generating a respective tile image that corresponds to the one or more respective text descriptions; and generating a photomosaic of the source image. The photomosaic of the source image is an image that replaces each of the plurality of patches of the source image with a respective tile image that has one or more properties that are similar to one or more corresponding properties of the patch. The generating comprises: processing an image input comprising the source image and the respective text descriptions for the plurality of patches using a text and image conditioned image generation neural network to generate the photomosaic.

Each tile image having the one or more properties that are similar to one or more corresponding properties of the patch can mean that each tile image has an appearance that approximates the appearance of the corresponding patch. **In** other words, the text and image conditioned generative neural network is conditioned on a patch and the respective text description to generate a corresponding tile image that corresponds to the respective text description and which (nevertheless) approximates the appearance of the patch. For example, the tile images can be generated by the text and image conditioned generative neural network in accordance with the respective text descriptions whilst preserving the one or more properties of the corresponding patches, which may, for example, include one or more properties such as one or more of color composition, a segmentation mask, shapes of one or more objects depicted in the patch, one or more edges within the patch, and so on. Thus, when the patches are replaced by the corresponding tile images, the resulting photomosaic has an appearance that approximates the appearance of the input image as a whole.

A photomosaic of an input image is an image that replaces each patch of the input image with a respective tile image that has one or more properties that are similar to the patch. That is, the tiles of the photomosaic maintain the one or more properties of the corresponding patches but differ from the corresponding patches in other properties.

Particular embodiments of the subject matter described in this specification can be implemented so as to realize one or more of the following advantages.

Generating high-quality photomosaics is a challenging task. For example, some systems generate photomosaics by, for each patch of a source image, searching through a library of images that can replace the patch in the photomosaic. This makes it difficult to generate different, diverse photomosaics from a single source image and requires access to large library of images.

The system as described in this specification, on the other hand, can generate a photomosaic of a source (input) image from only a text input that describes certain properties of the tiles of the photomosaic. More specifically, by leveraging an image generation neural network that is conditioned on the source image and on the text input, this specification can effectively and flexibly generate photomosaics that have user-specified values for some properties while accurately matching the source image in other properties. This encourages more creative flexibility in photomosaic creation and allows for easier customization in terms of the content of the tile images in the photomosaic, how close of a match the tile images are to the corresponding patch, the specific color theme, and so on. In particular, the described system uses the generative neural network to generate the tiles of the photomosaic in a manner that ensures that the tiles match the corresponding patches in certain properties, e.g., color, while differing from the source image in a way that is specified by the conditioning text, e.g., in the type of object or other semantic content that is depicted within the tile.

Moreover, the system can flexibly and accurately generate new photomosaics from the same source image without access to any existing images other than the source image.

The details of one or more embodiments of the subject matter of this specification are set forth in the accompanying drawings and the description below.

According to a first aspect there is provided a method performed by one or more computers. The method includes receiving an input including a source image and, for each of a plurality of patches of the source image, one or more respective text descriptions. The method further includes generating a photomosaic of source image. The photomosaic of the source image is an image that replaces each of the plurality of patches of the source image with a respective tile image that has one or more properties that are similar to one or more corresponding properties of the patch. The generating of the photomosaic includes processing an image input including the source image and the respective text descriptions for the plurality of patches using a text and image conditioned image generation neural network to generate the photomosaic.

In some implementations, the one or more respective text descriptions are the same for each of the plurality of patches.

In some cases, the one or more respective text descriptions are different between two or more of the plurality of patches.

In some implementations, the one or more respective text descriptions include a positive text description describing target characteristics of the corresponding tile image.

In some implementations, the one or more respective text descriptions include a negative text description describing characteristics that the corresponding tile image should not have.

Further in some cases, the processing of an image input includes the source image and the respective text descriptions for the plurality of patches using a text and image conditioned image generation neural network to generate the photomosaic. The generation further includes applying, to each patch of the source image, one or more transformations to generate a transformed patch that maintains the one or more properties of the patch while obscuring other content of the patch. Then processing the transformed patches and the respective text descriptions using the text and image conditioned image generation neural network.

In some cases, the one or more transformations include one or more learned transformations that are applied by the text and image conditioned image generation neural network.

In some cases, the one or more transformations include one or more transformations that are applied prior to processing the source image using the text and image conditioned image generation neural network.

Further in some cases, the one or more properties include a color composition of the patch.

Further in some cases, one or more transformations include applying a downsampling transformation to the patch to generate a down-sampled patch/ Then applying an up-sampling transformation to the down-sampled patch to generate a patch that has a same resolution as the patch of the source image.

In some implementations, the one or more properties include a segmentation mask of the patch.

In some implementations, the one or more properties include a shape of one or more objects depicted in the patch.

In some implementations, the one or more properties includes one or more properties of one or more edges depicted in the patch.

In some cases, processing an image input includes the source image and the respective text descriptions for the plurality of patches includes, for each of the patches, processing a patch input including a corresponding patch from the source image and the one or more respective text descriptions for the patch using the image generation neural network to generate the respective tile image corresponding to the patch.

In some cases, the patch input includes one or more additional patches from the source image.

In some implementations, the image is a video frame from a video and the patch input includes one or more additional patches from one or more respective other video frames in the video.

In some implementations, the method further includes obtaining one or more parameters that characterize respective target properties of the photomosaic, and where the patch input includes the one or more parameters.

In some cases, the text-conditional image generation neural network is configured to process the image input to generate the plurality of tile images in the photomosaic in parallel.

In some implementations, the source image is a video frame from a video and the image input includes one or more additional video frames in the video.

In some implementations, the method further includes obtaining one or more parameters that characterize respective target properties of the photomosaic, and where the image input includes the one or more parameters.

In some cases, the one or more parameters includes a first parameter that specifies a degree to which a color of each tile image in the photomosaic matches a color of the corresponding patch in the source image.

In some implementations, the one or more parameters includes a second parameter that specifies a degree to which a content of each of the tile images in the photomosaic matches the respective text description of the corresponding patch.

In some cases, the one or more parameters includes a third parameter that specifies a degree to which shapes on each tile image in the photomosaic match shapes in the corresponding patch in the source image.

In some implementations, processing an image input including the source image and the respective text descriptions for the plurality of patches includes processing the image input using the text and image conditioned image generation neural network to generate an initial photomosaic that has initial tile images having an initial resolution. Then applying an upscaling machine learning model to each initial tile image to generate a final tile image having a final resolution that is higher than the initial resolution.

In some cases, the source image is a video frame from a video and the upscaling machine learning model is a video upscaling machine learning model.

According to a second aspect there is provided the methods of the first aspect performed by a system that includes one or more computers and one or more storage devices storing instructions that when executed by the one or more computers cause the one or more computers to perform the respective operations of the respective method.

According to a third aspect there is provided the method of the first aspect performed by one or more computer-readable storage media storing instructions that when executed by one or more computers cause the one or more computers to perform the respective operations of the respective method.

Other features, aspects, and advantages of the subject matter will become apparent from the description, the drawings and the claims.

### BRIEF DESCRIPTION OF THE DRAWINGS

FIG. 1A shows an example image generation system that includes a text and image conditioned generative neural network.
FIG. 1B shows an example input and output in the example image generation system of FIG. 1A.
FIG. 2 is a diagram that illustrates an example text and image conditioned generative neural network including a text-to-image diffusion model.
FIG. 3 is a flow diagram of an example process for generating an output photomosaic by using a text and image conditioned generative neural network.
FIG. 4 is a flow diagram of sub-steps of one of the steps of the process of FIG. 3.
FIG. 5 is a flow diagram of sub-steps of one of the steps of the process of FIG. 4.

Like reference numbers and designations in the various drawings indicate like elements.

### DETAILED DESCRIPTION

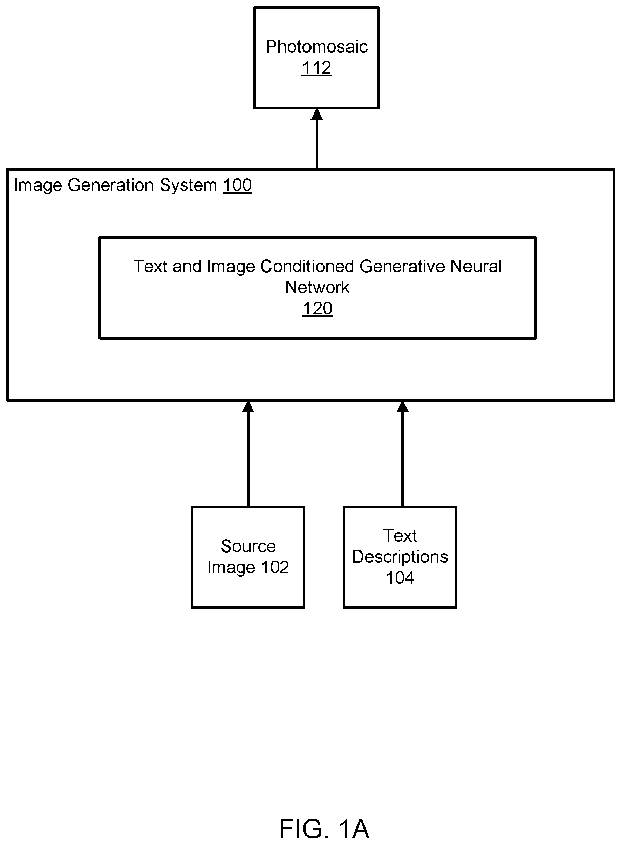

FIG. 1A shows an example image generation system 100 that includes a text and image conditioned neural network 120. The image generation system 100 is an example of a system implemented as computer programs on one or more computers in one or more locations in which the systems, components and techniques described below are implemented.

The image generation system 100 receives as input an input image 102 and one or more text descriptions 104 for each of a plurality of patches that make up the input image 102.

Using a text and image conditioned generative neural network 120, the image generation system 100 generates an output photomosaic 112 of the input image 102 from the input image 102 and the one or more text descriptions 104 for the patches.

As used herein, an "image" can mean a digital image, such as a two-dimensional image or a three-dimensional image, or even consecutive frames of video. An image can have multiple pixels, where each pixel can have multiple values. As one example, the image can comprise a digital image of a real-world scene, e.g., an image of the scene captured by a camera or other image sensor.

As used herein a "patch" of an image can mean a small, localized region or segment of the larger image while a "patch" of a video includes a small, localized region or segment of a larger video frame. A patch can have any of a variety of sizes and shapes, but typically are square or rectangular. The input image 102 can be divided into a plurality of images by the system 100, or the input image 102 can be provided in the form of a plurality of patches to the system.

Generally, the system 100 generates the photomosaic by replacing each patch of the input image 102 with a respective tile image. The generated photomosaic 112 is a photomosaic of the input image 102 composed of tile images characterized by the text descriptions 104. That is, the photomosaic 112 can have a particular style specified in the text descriptions 104 and/or the tile images can depict a particular object and properties specified in the text descriptions 104.

In general, the system is configured to generate the tiles such that when the photomosaic is generated by replacing each patch of the input image with the corresponding tile, the tiles have a collective appearance that approximates the appearance of the input image. For example, the generated photomosaic can preserve relatively large-scale features of the input image, whilst nevertheless including relatively short-scale features that are different from those of the input image. For example, different features or properties of the generated photomosaic can be apparent to a viewer of the photomosaic depending on a distance of the viewer from the photomosaic, or on a magnification level applied to the photomosaic, and so on. Generating the photomosaic can therefore be viewed as performing an image processing operation on the pixel values of the input image to determine an output image that approximates the large-scale appearance of the input image using different small-scale features.

In some implementations, the system 100 can generate a photomosaic of an input video. A photomosaic of an input video is a video in which each patch of each video frame is replaced with a respective tile image. In other words, the input image 102 is one of the video frames from the input video and the system 100 generates a respective photomosaic of each of the other video frames of the video, in addition to the photomosaic 112 of the input image 102.

The text descriptions 104 can specify a particular style of the photomosaic 112 by describing one or more target properties of the tile images that are generated from the corresponding patch.

Generally, the text descriptions 104 for a given patch can include a positive description characterizing target properties of the tile image to be generated from the input patch, e.g., an image of a particular object, a certain color scheme, etc. Optionally, in some cases, the text descriptions 104 further include a negative description that characterizes properties that the tile image should not have, e.g., low quality, messy, abstract, to keep the model from generating these undesirable qualities.

In some implementations, the text descriptions 104 are the same for all of the patches while in other cases different patches can have different text descriptions 104. That is, in some implementations, the system 100 receives a single set of text descriptions 104 that are applicable to all of the patches of the image while in other cases the system receives different sets of text descriptions 104 for different ones of the patches. For example, the patches in the upper left quadrant of an input image 102 can have a different text description than the patches in the lower right quadrant of the input image 102.

The target properties of the tile image can include color composition, segmentation masks, objects shapes, edges, or any other appropriate image properties. The system 100 generates the tiles of the photomosaic 112 to maintain one or more properties of the corresponding patch that the tile is replacing but the tiles can differ from the corresponding patches in other properties. As a particular example, the photomosaic 112 can maintain the respective color compositions of the patches of the input image 102 while modifying the semantic content of the patches, e.g., to depict different objects or to modify the visual appearance or style of the depicted objects.

In some implementations, the system 100 also receives one or more parameters that characterize respective target properties of the photomosaic 112. For example, the system 100 can receive a scalar value that defines a degree to which each of the one or more properties match between the tiles and their corresponding patches. That is, the system 100 can generate each tile in accordance with respective scalar values that each define a degree to which the one or more properties match between the tiles and their corresponding patches.

As a particular example, the system 100 can receive a color matching scalar (i.e., scalar value) that controls how closely each tile in the photomosaic 112 color-matches with the corresponding patch in the input image 102.

As another example, the system 100 can receive a text-description scalar that controls the degree to which the content of each of the tile images matches the respective text description 104 of the corresponding patch.

As another example, the system 100 can receive an object scalar that controls how closely the shapes on each tile image match with the shapes in the corresponding patch in the input image 102.

Generally, the higher the scalar value, the more similar the photomosaic 112 generated by the system 100 will resemble the input image 102 in terms of the property corresponding to the scalar value.

In these implementations, the system 100 can include these one or more scalar values in the input to the generative neural network 120 so that the generative neural network 120 can be configured to generate the photomosaic 112 to more or less accurately reflect the respective target property in accordance with each of the one or more scalars.

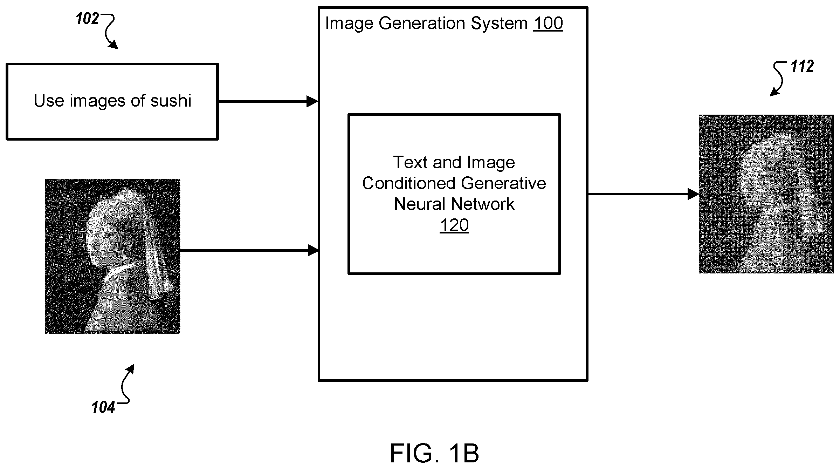

FIG. 1B shows an example input and output for the example image generation system 100 of FIG. 1A. As depicted in FIG. 1B, the image generation system 100 receives the following as text description 104: "use images of sushi." The system also receives as input image 104 an image of a painting "Girl with a Pearl Earring."

The image generation system 100 then uses the text description 104, the input image 102 and the text and image conditioned generative neural network 120 to generate a photomosaic 112 which depicts the "Girl with a Pearl Earring" image composed of tile images of sushi. In this example, the text description 104 is a positive text description characterizing the target object depicted in each of the tile images.

In some implementations, the image generation system 100 can provide the photomosaic 112 for presentation to a user on a user computer, e.g., as a response to the user who submitted the input image 102 and text descriptions 104. As another example, the image generation system 100 can store the photomosaic 112 in a repository for later retrieval.

For example, the system 100 can be part of a photo or video editing software application, and the software application can allow users to apply a photomosaic "filter" to videos or images that are specified by the user. As part of applying this filter, the software application can allow users to submit the text descriptions 104 and, optionally, specify the scalar values. The system 100 then generates the photomosaic to be displayed to the user in the software application.

In some implementations, the generated photomosaic can be output in a physical form, e.g., by printing onto a physical medium such as paper or fabric. The system 100 can, for example, be configured to output the generated photomosaic in a file format suitable for processing by a printer device, such as a JPEG, PNG, BMP, or GIF file format.

As another example, the system 100 can be part of a video conferencing software application, and the software application can allow users to generate photomosaics that can be used as background images during video conferences. To generate these background images, the software application can allow users to submit the text descriptions 104 and, optionally, specify the scalar values. The system 100 then generates the photomosaic to be displayed to the user in the software application.

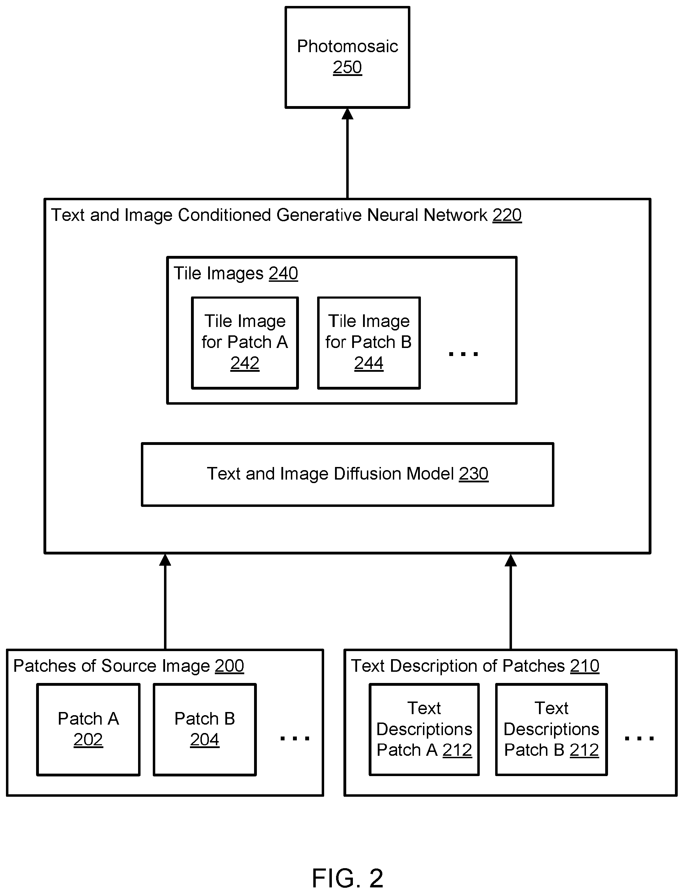

FIG. 2 is a diagram that illustrates an example text and image conditioned generative neural network that includes a text-to-image diffusion model.

As input, the text and image conditioned generative neural network 220 receives a plurality of patches of the source image 200.

As described above, an input (source) image is comprised of a plurality of patches. Patches can vary in size and shape. A patch can be a square patch, a rectangular patch, a hexagonal patch, a circular patch, or any other appropriate geometry. In some implementations, a patch can be an 8x8 pixel, 16x16 pixel, 32x32 pixel, or 64x64 pixel square patch. In some implementations, the patches are uniform in size across an input image and in other implementations, the patches are variable in size.

In this particular example, the text and image conditioned generative neural network 220 receives patch A 202, patch B 204 and any other number of patches in the input image.

The text and image conditioned generative neural network 220 also receives as input text description of the patches 210, which include a text description for each of a plurality of patches 200.

In some implementations, the system can receive one or more text descriptions 210 for each of the patches 200. In some implementations, the system receives two text descriptions for each patch: a positive text description and a negative text description. For example, the text and image conditioned generative neural network 220 can receive one or more text descriptions for patch A 212, one or more text descriptions for patch B 214, and, more generally, one or more text descriptions 210 for each of the plurality of patches of the input image.

In some implementations, the text descriptions vary across patches. For example, the one or more text descriptions for patch A 202 can differ from the one or more text descriptions for patch B 204. As an example, one of the text descriptions 212 can characterize the tile image generated from patch A 202 as depicting a fire while one of the text descriptions 214 can characterize the tile image generated from patch B 204 as depicting a firework.

As described above, the inputs can also optionally include additional information, e.g., scalar values.

The inputs are the processed by the text and image conditioned generative neural network 220.

The text and image conditioned generative neural network can generally have any appropriate architecture.

For example, the system can use an auto-regressive generative neural network to generate the photomosaic. One example of such a neural network is Parti (Yu et al. "Scaling Autoregressive Models for Content-Rich Text-to-Image Generation", arXiv:2206.10789v1, 2022).

As another example, the system can use a masked token generative model that sequentially unmasks visual tokens during generation of the photomosaic. One example of such a generative neural network is Muse (Chang et al. "Muse: Text-To-Image Generation via Masked Generative Transformers", arXiv:2301.00704v1, 2023).

In the particular example of FIG. 2, the text and image conditioned generative neural network is a text-to-image diffusion model 230 that is used to process the patches of the input image 200 and their respective text descriptions 210.

For example, the text-to-image diffusion model 230 can be a diffusion model that performs denoising in pixel space, a latent diffusion model that performs denoising in a latent space, a hierarchical diffusion model, or any other appropriate diffusion model.

Examples of diffusion models 230 that can be used by the system are described in more detail below.

In some implementations, a transformation can be applied to the patches of the input image 210 before providing the transformed patches as input to the text and image conditioned generative neural network 220.

The potential transformations may include cropping, resizing the image to fit the model's input size or aspect ratio or any other appropriate transformations to make the input patch usable by the model.

As a particular example, when the system generates photomosaics that maintain the color composition of the input image, the system can apply a down-sampling transformation to the patch to generate a down-sampled patch. For example, the patch may be blurred, e.g., to cut out details of the patch, and thereby focus on the color composition when the generative neural network generates the corresponding tile image. The system can then apply an up-sampling transformation to the down-sampled patch to generate a patch that has the same resolution as the patch of the input image. This transformation results in a blurred patch where the color composition of the patch is highlighted, making it easier for the neural network to modify the semantic content of the patch while maintaining the color composition.

In some other implementations, the text-to-image diffusion model 230 processes the input by applying to each patch of the input image 200, one or more transformations to generate a transformed patch that maintains the one or more properties of the patch while obscuring other content of the patch. The one or more properties of the patch that are maintained by the transformed patch can include, e.g., a color composition of the patch. In some implementations, the one or more properties can be one or more edges depicted in the patch, a segmentation mask of the patch, or object shapes depicted in the patch. Generally, the properties that are maintained by the transformation will depend on the properties that are required to match between photomosaic and the source image.

After the transformations, the text-to-image diffusion model 230 then processes the transformed patches and their respective text descriptions 210 to generate tile images 240.

The text-to-image diffusion model generates a respective tile image for each of the patches of the input image 200. For example, the text-to-image diffusion model 220 can generate a tile image for patch A 242, a tile image for patch B 244 and a tile image for each of the plurality of patches of the input image.

In some implementations, the text-to-image diffusion model 230 generates initial tile images having an initial resolution and applies an upscaling machine learning model to generate final tile image having a final resolution that is higher than the initial resolution. The upscaling machine learning model can have any appropriate architecture. As one example, the upscaling machine learning model can be a diffusion model, e.g., as described in Ho et al. "Cascaded Diffusion Models for High Fidelity Image Generation", arXiv: 2106.15282.

The text-to-image diffusion model can then utilize the generated tile images to compose a photomosaic 250 of the input image, i.e., by inserting each tile image in place of the corresponding patch within the photomosaic 250.

In some implementations, the text-to-image diffusion model 230 generates each tile of the photomosaic separately and then composites the generated tiles to generate the photomosaic.

In some other implementations, the text-to-image diffusion model 230 generates the entire photomosaic in parallel, e.g., using a plurality of hardware accelerators, such as graphics processing units (GPUs) or tensor processing units (TPUs).

In some implementations, the text-to-image diffusion model 230 can compose the generated tiles for each patch of each video frame in a video into a video photomosaic.

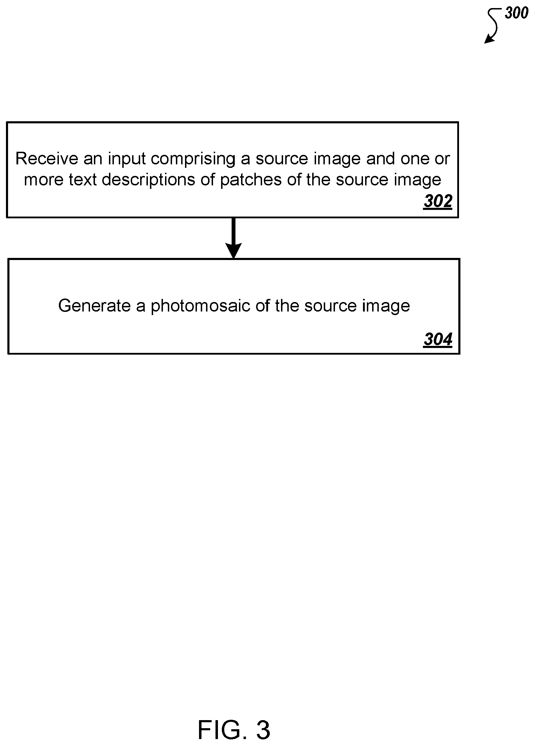

FIG. 3 is a flow diagram of an example process 300 for generating an output photomosaic by using a text and image conditioned generative neural network.

For convenience, the process 300 will be described as being performed by a system of one or more computers located in one or more locations. For example, an image generation system, e.g., the image generation system 100 depicted in FIG 1A, appropriately programmed in accordance with this specification, can perform the process 300.

To generate an output photomosaic, the system uses a text and image conditioned neural network.

The system receives an input that includes an input image and one or more text description of patches of the input image (step 302). In some implementations, the system can receive two text descriptions for each of a plurality of patches of the input image: a positive text description and a negative text description. In some implementations, the system only receives one text description for each of a plurality of patches, e.g., only a positive text description.

As described above, the input can also include additional information, e.g., values for one or more scalars.

As described above, in some cases, the input image is one of the video frames of the video and the system performs the process 300 for each of the video frames in order to generate a photomosaic of the video.

The system then generates a photomosaic of the input image (step 304). The photomosaic is composed of generated tile images characterized by the text descriptions of the corresponding patch.

Generally, the system generates the photomosaic by processing an image input that includes the source (input) image and the respective text descriptions for the plurality of patches using a text and image conditioned image generation neural network. As described above, the input can also include additional information, e.g., the one or more scalar values described above.

For example, for each patch, the system can process a patch input that includes a corresponding patch from the source image and the one or more respective text descriptions for the patch using the image generation neural network to generate the respective tile image corresponding to the patch. In some cases, the patch input can also include additional information, e.g., the one or more scalar values described above.

In some cases, the patch input for a given patch includes only the corresponding patch from the source image and not any other patches. In other cases, to provide the image generation neural network with additional context, the patch input can also include some or all of the other patches from the source image. This can improve the consistency of the generated tile images across different patches.

Moreover, when the system is generating a photomosaic of a video, the patch input can optionally also include some or all of the patches from the source image, from other video frames in the video, or both.

In some cases, the system can apply one or more transformations to the patches of the input (source) image prior to or as part of the processing of the patches using the generative neural network. This is described in more detail below.

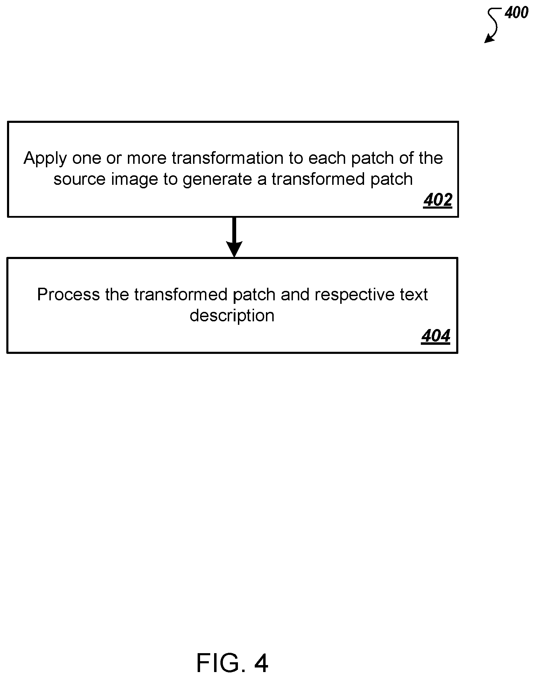

FIG. 4 is a flow diagram of sub-steps of step 304 of the process described in FIG. 3.

After the system receives the input image(s) and text descriptions, the system applies one or more transformations to each patch of the input image (step 402) to generate a transformed patch. Generally, the one or more transformations result in a transformed patch that maintains the one or more target properties of the patch while obscuring other content of the patch. This makes it easier for the generative neural network to effectively condition on the one or more target properties without conditioning on other content that may not be relevant to the one or more target properties and that should not be maintained.

In some implementations, the transformation(s) include one or more learned transformations that are applied by the text and image conditioned image generation neural network. For example, the system can augment the neural network with an input layer, e.g., a linear layer, a spatial transformer layer, and so on, that applies a learned transformation to patches of images and that is trained on training data specific to the photomosaic generation task. The transformation is utilized to help the model eliminate unnecessary characteristics and highlight the target properties of the patch characterized in the text descriptions.

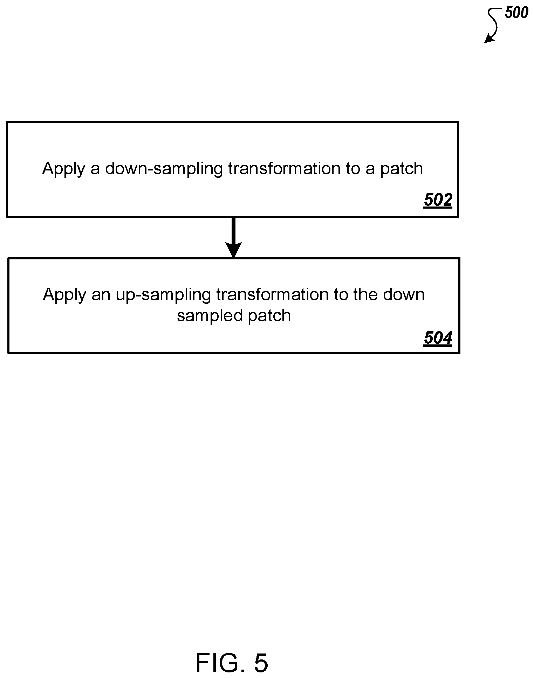

In some implementations, the transformations include one or more "fixed" transformations that are applied by the system prior to processing using the text and image conditioned generative neural network. For example, when the target property to be maintained is color composition, the one or more transformations can result in a transformed patch that is blurred so as to retain the color composition while obscuring other properties, e.g., semantic content. An example of this transformation is described below with reference to FIG. 5.

The system then processes the transformed patches using the text and image conditioned generation neural network to generate the photomosaic (step 404). As described above, because the transformed patches are transformed to focus on the target properties of the patch, the generation neural network can effectively generate tile images that maintain the target properties while modifying other properties as specified by the text description and, optionally, by the scalar values. For example, if the target property was color-composition and the text description was images of sushi, the neural network would take the blurred patch highlighting the color composition of the patch and generate a tile image of sushi that matched the color composition of the patch.

FIG. 5 is a flow diagram of sub-steps of step 402 of the sub-process of FIG. 4. In particular, FIG. 5 shows an example of a transformation that is applied when the photomosaic maintains the color composition of the input image while modifying other properties of the input image, e.g., which objects are depicted in the tiles of the image.

In order to target color composition of the patch during transformation, the system can apply a down-sampling transformation to a patch (step 502). A down-sampling transformation can reduce noise and detail within the patch, focusing on the color composition. That is, the system can apply a transformation that down-samples the patch from the input resolution to a target, lower resolution. **In** some implementations, the model can denoise the patch in a latent space and in others, the model can denoise the patch in pixel space.

The system then can apply an up-sampling transformation to the down sampled patch (step 504). That is, the system can apply a transformation that up-samples the patch from the target resolution back to the input resolution. Because of the loss of information when down-sampling to the target resolution, the up-sampling transformation can result in a blurred image of the original resolution of the patch that maintains the color composition while obscuring unnecessary detail. The up-sampled patch is then processed with the respective text description to generate the photomosaic.

As described above, in some implementations, the image generation neural network is a text-to-image diffusion neural network. Examples of how to generate a tile image conditioned on an input that includes a patch of the source image and a text description now follow.

A text-to-image diffusion neural network is a neural network that can be used to perform a reverse diffusion process to generate an output image from a given conditioning input that includes text. Thus, the text-to-image diffusion neural network can be referred to as a conditional diffusion neural network. As described above, the conditioning input will also generally include one or more patches (or one or more transformed patches) from the source image and, optionally, one or more scalar values.

To perform the reverse diffusion process, the system initializes a representation of the output image. For example, the system can sample each value in each representation from a noise distribution, e.g., a Gaussian distribution.

The system then updates the representation at each of a plurality of reverse diffusion steps (also referred to as "iterations" or "updating iterations") using the conditional diffusion neural network. Each reverse diffusion step is associated with a noise level for the iteration. Generally, each updating iteration has a corresponding time step t and the noise level for the iteration depends on the time step. For example, the noise level can be a decreasing function of the time step t. Examples of such functions include a linear function, a cosine function, and a sigmoid function. Thus, early iterations are associated with higher noise levels and later iterations are associated with lower noise levels, resulting in the diffusion neural network gradually "denoising" the representation to generate the final representation.

As part of the updating at any given step, the system generates a denoising output for the reverse diffusion step.

The system then updates the representation of the output image using the denoising output for the reverse diffusion step.

For example, the system can map the denoising output to an initial updated representation and then apply a diffusion sampler, e.g., the DDPM (Denoising Diffusion Probabilistic Model) sampler, the DDIM (Denoising Diffusion Implicit Model) sampler or another appropriate sampler, to the initial updated representation to generate an updated representation. Details of the DDPM sampler and the DDIM sampler can be found in, for example, Ho et al. "Denoising Diffusion Probabilistic Models" arXiv: 2006.11239 and Song et al. "Denoising Diffusion Implicit Models" arXiv: 2010.02502.

Optionally, after the last reverse diffusion iteration, the system can refrain from using the diffusion sampler and can instead use the initial updated representation as the final representation. That is, the system can keep the initial updated representation from the last reverse diffusion step as the final updated representation and not apply a diffusion sampler to the representation.

To generate the denoising output, the system processes a diffusion input for the reverse diffusion step that includes the representation of the output image and the conditioning input using the diffusion neural network to generate a denoising output, which can be used as the final denoising output or combined with one or more other denoising outputs, e.g., through classifier free guidance, to generate the final denoising output.

More specifically, the diffusion neural network can be any appropriate diffusion neural network that is configured to receive an input that includes a current (noisy) representation of an image and a conditioning input that includes text and to generate a denoising output.

For example, the diffusion neural network can include a text encoder neural network configured to process the text input to generate an encoded representation of the text input and an image diffusion neural network configured to generate the output image over a plurality of sampling steps conditioned on the encoded representation of the text input.

In some implementations, the diffusion neural network performs a diffusion process in pixel space, so that the images ("representations") operated on and generated by the diffusion neural network have values for each pixel that specify color values, e.g., RGB values or another color encoding scheme.

Examples of such diffusion neural networks include Imagen. See, e.g., Saharia et al. "Photorealistic Text-to-Image Diffusion Models with Deep Language Understanding" arXiv: 2205.11487.In some other implementations, the diffusion neural network performs a diffusion process in latent space, e.g., in a latent space that is lower-dimensional than the pixel space. That is, the images ("representations") operated on by the diffusion neural network are latent images and the values for the pixels of the images are learned, latent values rather than color values.

Examples of such diffusion neural networks include mobileDiffusion. See, e.g., Zhao et al. "MobileDiffusion: Instant Text-to-Image Generation on Mobile Devices", arXiv:2311.16567.

In these implementations, during training, the diffusion neural network can be associated with an image encoder to encode training images into the latent space and, after training and to generate new target images, a decoder neural network that receives an input that includes a latent representation of an image and decodes the latent representation to reconstruct the image. For example, both the encoder and the decoder neural networks can be convolutional neural networks, can be self-attention neural networks, or can include both convolutional and self-attention layers.

The diffusion neural network can have any appropriate architecture that allows the neural network to map a diffusion input that includes an input representation of a data item and to map the input representation to a denoising output that has the same dimensionality as the input representation.

For example, the diffusion neural network can be a convolutional neural network, e.g., a U-Net or other architecture that maps one input of a given dimensionality to an output of the same dimensionality.

As another example, the diffusion neural network can be a Transformer neural network that processes the diffusion input through a set of self-attention layers to generate the denoising output. Examples of such diffusion neural networks can be found in e.g., Peebles et al. "Scalable Diffusion Models with Transformers" arXiv: 2212.09748.

As yet another example, the diffusion neural network can include both convolutional layers and self-attention layers.

The diffusion neural network can be conditioned on the conditioning input in any of a variety of ways.

As one example, the diffusion neural network can use an encoder neural network to generate one or more embeddings that represent the conditioning input and the diffusion neural network can include one or more cross-attention layers that each cross-attend into the one or more embeddings.

As another example, the diffusion neural network can include one or more other types of neural network layers that are conditioned on the one or more embeddings. Examples of such layers include Feature-wise Linear Modulation (FiLM) layers, layers with conditional gated activation functions, and so on.

As another example, the output(s) of the encoder(s) when encoding the conditioning input can be combined, e.g., through a weighted sum, with features of the representation of the output image, and the combined features can be processed by the remainder of the diffusion neural network.

An embedding or representation, as used in this specification, is an ordered collection of numerical values, e.g., a vector of floating point values or other types of values.

As described above, the conditioning input generally includes text. For the text conditioning input, the diffusion neural network can use a text encoder neural network, e.g., a Transformer neural network or a recurrent neural network, to generate a fixed or variable number of text embeddings that represent the conditioning text.

The conditioning input also generally includes an image. For the image conditioning input, the diffusion neural network can use an image encoder neural network, e.g., a convolutional neural network or a vision Transformer neural network, to generate a fixed or variable number of image embeddings that represent the conditioning image.

When the conditioning input includes a scalar value, the system can use, e.g., an embedding matrix to map the scalar value or a one-hot representation of the scalar value to an embedding.

Generally, the conditioning input includes multiple different types of inputs, e.g., two or more of text, images, scalar values, and so on.

In some of these cases, the system can generate one or more initial embeddings for each of the different types of inputs, i.e., using an appropriate encoder neural network as described above, and then process the initial embeddings for all of the different types of inputs using a Transformer encoder neural network to update each of the initial embeddings to generate a set of final embeddings. The one or more cross-attention layers within the diffusion neural network can then cross-attend into the set of final embeddings.

In others of these cases, different cross-attention layers within the diffusion neural network can cross-attend into embeddings of different types of conditioning inputs.

In yet others of these cases, the system can concatenate the initial embeddings of the different types of inputs along the sequence dimension and then the one or more cross-attention layers can cross-attend into the concatenated set of final embeddings.

As another example, the diffusion neural network can include one or more other types of neural network layers that are conditioned on the one or more embeddings. Examples of such layers include Feature-wise Linear Modulation (FiLM) layers, layers with conditional gated activation functions, and so on.

The diffusion input at any given updating iteration can also include data defining a noise level for the iteration. Generally, each updating iteration has a corresponding time step t and the noise level for the iteration depends on the time step. For example, the noise level can be a decreasing function of the time step t. Examples of such functions include a linear function, a cosine function, and a sigmoid function. In these cases, data identifying the noise level, the time step, or both can be embedded using an appropriate neural network, e.g., a multi-layer perceptron (MLP) and used to condition the diffusion neural network as described above for the conditioning input.

Generally, the denoising output that is generated by the diffusion neural network defines an estimate of the final image given the current image.

In some implementations, the denoising output is an estimate of the noise component of the current image, i.e., the noise that needs to be combined with, e.g., added to or subtracted to, the final image to generate the current image.

In some other implementations, the denoising output is an estimate of the final image given the current image, i.e., an estimate of the image that would result from removing the noise component of the current image.

In yet other implementations, the system parametrizes the denoising output differently, e.g., using a v-parameterization (Salimans and Ho arXiv: 2202.00512, 2022, section 4; Appendix D) or another appropriate parameterization.

In some implementations, the system uses a pre-trained image generation neural network to generate the photomosaics. For example, the pre-trained image generation neural network can have been trained on a large data set of images to perform image editing tasks, e.g., on a data set like the InstructPix2Pix Image Editing Dataset described in Brooks, et al, InstructPix2Pix: Learning to Follow Image Editing Instructions, CVPR 2023.

In some other implementations, the system fine-tunes a pre-trained image generation neural network on the photomosaic generation task. For example, the system can obtain a training data set that includes (i) image patches and, for each image patch (ii) a text description and (iii) a target tile image described by the text description. The training data set can be obtained in a number of ways, such as from photomosaics generated by other techniques, e.g., photomosaics in which the tiles have been obtained by searching an image library for images that match the corresponding patches of the input image. As another example, the training data set can be obtained by applying transformations to images in an image editing data set, e.g., the data set described above. Optionally, the training data set can also include scalar values for the images that describe the degree to which the target tile image maintains the target properties of the corresponding image patch. For example, the scalar values can be generated by processing pairs of images in the training data set using a vision language model accompanied by a prompt that instructs the model to rate the similarity of a given property between the two pairs of images. The system can then train the generation neural network on the training data to fine-tune the generation neural network for the photomosaic generation task. For example, when the system applies learned transformations to generate transformed patches as described above, the system can learn the parameters of the input layer as part of this fine-tuning.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework or a Jax framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should be construed as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination.

Similarly, while operations are correspond toed in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes correspond toed in the accompanying figures do not necessarily require the particular order shown, or sequential order, to achieve desirable results. In some cases, multitasking and parallel processing may be advantageous.

## Claims

1. A method performed by one or more computers, the method comprising:
receiving (302) an input comprising a source image (102) and, for each of a plurality of patches (202, 204) of the source image, one or more respective text descriptions (104, 212) for generating a respective tile image that corresponds to the one or more respective text descriptions; and
generating (304) a photomosaic (112) of the source image (102), wherein the photomosaic of the source image is an image that replaces each of the plurality of patches of the source image with a respective tile image (242, 244) that has one or more properties that are similar to one or more corresponding properties of the patch, and wherein the generating comprises:
processing an image input comprising the source image and the respective text descriptions for the plurality of patches using a text and image conditioned image generation neural network (120) to generate the photomosaic.

2. The method of claim 1, wherein:
(i) the one or more respective text descriptions are the same for each of the plurality of patches; or
(ii) the one or more respective text descriptions are different between two or more of the plurality of patches.

3. The method of any preceding claim, wherein the one or more respective text descriptions comprise one or both of: (i) a positive text description describing target characteristics of the corresponding tile image; and (ii) a negative text description describing characteristics that the corresponding tile image should not have.

4. The method of any preceding claim, wherein processing an image input comprising the source image and the respective text descriptions for the plurality of patches using a text and image conditioned image generation neural network to generate the photomosaic comprises:
applying, to each patch of the source image, one or more transformations to generate a transformed patch that maintains the one or more properties of the patch while obscuring other content of the patch; and
processing the transformed patches and the respective text descriptions using the text and image conditioned image generation neural network; and
preferably, wherein:
(i) the one or more transformations comprise one or more learned transformations that are applied by the text and image conditioned image generation neural network, or
(ii) the one or more transformations comprise one or more transformations that are applied prior to processing the source image using the text and image conditioned image generation neural network.

5. The method of any preceding claim, wherein the one or more properties comprise a color composition of the patch.

6. The method of claim 5, when dependent on claim 4, wherein applying, to each patch of the source image, one or more transformations comprises:
applying a down-sampling transformation to the patch to generate a down-sampled patch; and
applying an up-sampling transformation to the down-sampled patch to generate a patch that has a same resolution as the patch of the source image.

7. The method of any preceding claim, wherein the one or more properties comprise one or more of (i) a segmentation mask of the patch; (ii) a shape of one or more objects depicted in the patch; and (iii) one or more properties of one or more edges depicted in the patch.

8. The method of any preceding claim, wherein processing an image input comprising the source image and the respective text descriptions for the plurality of patches comprises, for each of the patches:
processing a patch input comprising a corresponding patch from the source image and the one or more respective text descriptions for the patch using the image generation neural network to generate the respective tile image corresponding to the patch, and preferably, wherein:
(i) the patch input comprises one or more additional patches from the source image; or
(ii) the image is a video frame from a video and the patch input comprises one or more additional patches from one or more respective other video frames in the video.

9. The method of claim 8, wherein the method further comprises:
obtaining one or more parameters that characterize respective target properties of the photomosaic, and wherein the patch input comprises the one or more parameters.

10. The method of any one of claims 1-8, wherein:
the text-conditional image generation neural network is configured to process the image input to generate the plurality of tile images in the photomosaic in parallel, and
optionally, wherein the source image is a video frame from a video and the image input comprises one or more additional video frames in the video.

11. The method of claim 10, wherein the method further comprises:
obtaining one or more parameters that characterize respective target properties of the photomosaic, and wherein the image input comprises the one or more parameters.

12. The method of claim 9 or claim 11, wherein the one or more parameters comprise one or more of:
(i) a first parameter that specifies a degree to which a color of each tile image in the photomosaic matches a color of the corresponding patch in the source image;
(ii) a second parameter that specifies a degree to which a content of each of the tile images in the photomosaic matches the respective text description of the corresponding patch and
(iii) a third parameter that specifies a degree to which shapes on each tile image in the photomosaic match shapes in the corresponding patch in the source image.

13. The method of any preceding claim, wherein processing an image input comprising the source image and the respective text descriptions for the plurality of patches comprises:
processing the image input using the text and image conditioned image generation neural network to generate an initial photomosaic that has initial tile images having an initial resolution; and
applying an upscaling machine learning model to each initial tile image to generate a final tile image having a final resolution that is higher than the initial resolution, and,
optionally, wherein the source image is a video frame from a video and the upscaling machine learning model is a video upscaling machine learning model.

14. A system comprising:
one or more computers; and
one or more storage devices storing instructions that, when executed by the one or more computers, cause the one or more computers to perform the respective operations of the method of any one of claims 1-13.

15. One or more computer-readable storage media storing instructions that when executed by one or more computers cause the one or more computers to perform the respective operations of the method of any one of claims 1-13.

## Patentansprüche

1. Verfahren, durchgeführt durch einen oder mehrere Computer, wobei das Verfahren Folgendes umfasst:
Empfangen (302) einer Eingabe, umfassend ein Quellbild (102) und für jeden einer Vielzahl von Ausschnitten (202, 204) des Quellbildes eine oder mehrere jeweilige Textbeschreibungen (104, 212) zum Erzeugen eines jeweiligen Kachelbildes, das der einen oder den mehreren jeweiligen Textbeschreibungen entspricht; und
Erzeugen (304) eines Photomosaiks (112) des Quellbildes (102), wobei das Photomosaik des Quellbildes ein Bild ist, das jeden der Vielzahl von Ausschnitten des Quellbildes durch ein jeweiliges Kachelbild (242, 244) ersetzt, das eine oder mehrere Eigenschaften aufweist, die einer oder mehreren entsprechenden Eigenschaften des Ausschnitts ähnlich sind, und wobei das Erzeugen Folgendes umfasst:
Verarbeiten einer Bildeingabe, umfassend das Quellbild und die jeweiligen Textbeschreibungen für die Vielzahl von Ausschnitten unter Verwendung eines text- und bildbedingten neuronalen Bildgenerierungsnetzwerks (120) zum Erzeugen des Photomosaiks.

2. Verfahren nach Anspruch 1, wobei:
(i) die eine oder die mehreren jeweiligen Textbeschreibungen für jeden der Vielzahl von Ausschnitten identisch sind; oder
(ii) die eine oder die mehreren jeweiligen Textbeschreibungen sich zwischen zwei oder mehr der Vielzahl von Ausschnitten unterscheiden.

3. Verfahren nach einem vorhergehenden Anspruch, wobei die eine oder die mehreren jeweiligen Textbeschreibungen eines oder beides von Folgendem umfassen: (i) eine positive Textbeschreibung, die Zielmerkmale des entsprechenden Kachelbildes beschreibt; und (ii) eine negative Textbeschreibung, die Merkmale beschreibt, die das entsprechende Kachelbild nicht aufweisen sollte.

4. Verfahren nach einem der vorhergehenden Ansprüche, wobei Verarbeiten einer Bildeingabe, umfassend das Quellbild und die jeweiligen Textbeschreibungen für die Vielzahl von Ausschnitten unter Verwendung eines text- und bildbedingten neuronalen Bildgenerierungsnetzwerks zum Erzeugen des Photomosaiks, Folgendes umfasst:
Anwenden einer oder mehrerer Transformationen auf jeden Ausschnitt des Quellbildes, um einen transformierten Ausschnitt zu erzeugen, der die eine oder die mehreren Eigenschaften des Ausschnitts beibehält, während andere Inhalte des Ausschnitts verdeckt werden; und
Verarbeiten der transformierten Ausschnitte und der jeweiligen Textbeschreibungen unter Verwendung des text- und bildbedingten neuronalen Bildgenerierungsnetzwerks; und
vorzugsweise wobei:
(i) die eine oder mehreren Transformationen eine oder mehrere gelernte Transformationen umfassen, die durch das text- und bildbedingte neuronale Bildgenerierungsnetzwerk angewendet werden, oder
(ii) die eine oder mehreren Transformationen eine oder mehrere Transformationen umfassen, die vor dem Verarbeiten des Quellbildes unter Verwendung des text- und bildbedingten neuronalen Bildgenerierungsnetzwerks angewendet werden.

5. Verfahren nach einem der vorhergehenden Ansprüche, wobei die eine oder die mehreren Eigenschaften eine Farbzusammensetzung des Ausschnitts umfassen.

6. Verfahren nach Anspruch 5, wenn abhängig von Anspruch 4, wobei Anwenden einer oder mehrerer Transformationen auf jeden Ausschnitt des Quellbildes Folgendes umfasst:
Anwenden einer Downsampling-Transformation auf den Ausschnitt, um einen herunterskalierten Ausschnitt zu erzeugen; und
Anwenden einer Upsampling-Transformation auf den herunterskalierten Ausschnitt, um einen Ausschnitt zu erzeugen, der dieselbe Auflösung wie der Ausschnitt des Quellbildes aufweist.

7. Verfahren nach einem vorhergehenden Anspruch, wobei die eine oder die mehreren Eigenschaften eines oder mehrere von (i) einer Segmentierungsmaske des Ausschnitts, (ii) einer Form von einem oder mehreren in dem Ausschnitt dargestellten Objekten und (iii) einer oder mehreren Eigenschaften von einer oder mehreren in dem Ausschnitt dargestellten Kanten umfassen.

8. Verfahren nach einem vorhergehenden Anspruch, wobei Verarbeiten einer Bildeingabe, die das Quellbild und die jeweiligen Textbeschreibungen für die Vielzahl von Ausschnitten umfasst, für jeden der Ausschnitte Folgendes umfasst:
Verarbeiten einer Ausschnittseingabe, umfassend einen entsprechenden Ausschnitt aus dem Quellbild und die eine oder die mehreren jeweiligen Textbeschreibungen für den Ausschnitt unter Verwendung des neuronalen Bildgenerierungsnetzwerks, um das dem Ausschnitt entsprechende jeweilige Kachelbild zu erzeugen, und vorzugsweise wobei:
(i) die Ausschnittseingabe einen oder mehrere zusätzliche Ausschnitte aus dem Quellbild umfasst; oder
(ii) das Bild ein Videoframe aus einem Video ist und die Ausschnittseingabe einen oder mehrere zusätzliche Ausschnitte aus einem oder mehreren jeweiligen anderen Videoframes in dem Video umfasst.

9. Verfahren nach Anspruch 8, wobei das Verfahren ferner Folgendes umfasst:
Erlangen eines oder mehrerer Parameter, die jeweilige Zieleigenschaften des Photomosaiks kennzeichnen, und wobei die Ausschnittseingabe den einen oder die mehreren Parameter umfasst.

10. Verfahren nach einem der Ansprüche 1 bis 8, wobei:
das textbedingte neuronale Bildgenerierungsnetzwerk konfiguriert ist, um die Bildeingabe zu verarbeiten, um die Vielzahl von Kachelbildern in dem Photomosaik parallel zu erzeugen, und
optional wobei das Quellbild ein Videoframe aus einem Video ist und die Bildeingabe einen oder mehrere zusätzliche Videoframes in dem Video umfasst.

11. Verfahren nach Anspruch 10, wobei das Verfahren ferner Folgendes umfasst:
Erlangen eines oder mehrerer Parameter, die jeweilige Zieleigenschaften des Photomosaiks kennzeichnen, und wobei die Bildeingabe den einen oder die mehreren Parameter umfasst.

12. Verfahren nach Anspruch 9 oder Anspruch 11, wobei der eine oder die mehreren Parameter eines oder mehrere von Folgendem umfassen:
(i) einen ersten Parameter, der angibt, inwieweit eine Farbe jedes Kachelbildes in dem Photomosaik mit einer Farbe des entsprechenden Ausschnitts in dem Quellbild übereinstimmt;
(ii) einen zweiten Parameter, der angibt, inwieweit ein Inhalt jedes der Kachelbilder in dem Photomosaik mit der jeweiligen Textbeschreibung des entsprechenden Ausschnitts übereinstimmt, und
(iii) einen dritten Parameter, der angibt, inwieweit die Formen auf jedem Kachelbild in dem Photomosaik mit den Formen in dem entsprechenden Ausschnitt des Quellbildes übereinstimmen.

13. Verfahren nach einem vorhergehenden Anspruch, wobei Verarbeiten einer Bildeingabe, die das Quellbild und die jeweiligen Textbeschreibungen für die Vielzahl von Ausschnitten umfasst, Folgendes umfasst:
Verarbeiten der Bildeingabe unter Verwendung des text- und bildbedingten neuronalen Bildgenerierungsnetzwerks, um ein erstes Photomosaik zu erzeugen, das erste Kachelbilder aufweist, die eine erste Auflösung aufweisen; und
Anwenden eines Maschinenlernmodells zur Hochskalierung auf jedes Ausgangskachelbild, um ein Endkachelbild zu erzeugen, das eine Endauflösung aufweist, die höher als die erste Auflösung ist, und
optional wobei das Quellbild ein Videoframe aus einem Video ist und das Maschinenlernmodell zur Hochskalierung ein Maschinenlernmodell zur Video-Hochskalierung ist.

14. System, umfassend:
einen oder mehrere Computer; und
eine oder mehrere Speichervorrichtungen, die Anweisungen speichern, die bei Ausführung durch den einen oder die mehreren Computer den einen oder die mehreren Computer veranlassen, die jeweiligen Operationen des Verfahrens nach einem der Ansprüche 1 bis 13 durchzuführen.

15. Ein oder mehrere computerlesbare Speichermedien, die Anweisungen speichern, die bei Ausführung durch einen oder mehrere Computer den einen oder die mehreren Computer veranlassen, die jeweiligen Operationen des Verfahrens nach einem der Ansprüche 1 bis 13 durchzuführen.

## Revendications

1. Procédé réalisé par un ou plusieurs ordinateurs, le procédé comprenant :
la réception (302) d'une entrée comprenant une image source (102) et, pour chacune d'une pluralité de portions (202, 204) de l'image source, une ou plusieurs descriptions textuelles respectives (104, 212) pour la génération d'une image de fragment respective qui correspond aux une ou plusieurs descriptions textuelles respectives ; et
la génération (304) d'une photomosaïque (112) de l'image source (102), dans lequel la photomosaïque de l'image source est une image remplaçant chacune de la pluralité de portions de l'image source par une image de fragment respective (242, 244) possédant une ou plusieurs propriétés similaires à une ou plusieurs propriétés correspondantes de la portion, et dans lequel la génération comprend :
le traitement d'une entrée d'image comprenant l'image source et les descriptions textuelles respectives pour la pluralité de portions à l'aide un réseau neuronal de génération d'images conditionné par texte et image (120) pour générer la photomosaïque.

2. Procédé selon la revendication 1, dans lequel :
(i) les une ou plusieurs descriptions textuelles respectives sont identiques pour chacune de la pluralité de portions ; ou
(ii) les une ou plusieurs descriptions textuelles respectives sont différentes entre deux ou plusieurs de la pluralité de portions.

3. Procédé selon l'une quelconque des revendications précédentes, dans lequel les une ou plusieurs descriptions textuelles respectives comprennent une ou deux : (i) d'une description textuelle positive décrivant les caractéristiques cibles de l'image de fragment correspondante ; et (ii) d'une description textuelle négative décrivant les caractéristiques que l'image de fragment correspondante ne devrait pas avoir.

4. Procédé selon une quelconque revendication précédente, dans lequel le traitement d'une entrée d'image comprenant l'image source et les descriptions textuelles respectives pour la pluralité de portions à l'aide d'un réseau neuronal de génération d'images conditionné par texte et image pour générer la photomosaïque comprend :
l'application, à chaque portion de l'image source, d'une ou plusieurs transformations afin de générer une portion transformée qui conserve les une ou plusieurs propriétés de la portion tout en masquant d'autres éléments de la portion ; et
le traitement des portions transformées et des descriptions textuelles respectives à l'aide du réseau neuronal de génération d'images conditionnées par texte et image ; et
de préférence, dans lequel :
(i) les une ou plusieurs transformations comprennent une ou plusieurs transformations apprises qui sont appliquées par le réseau neuronal de génération d'images conditionnées par texte et image, ou
(ii) les une ou plusieurs transformations comprennent une ou plusieurs transformations qui sont appliquées avant le traitement de l'image source à l'aide du réseau neuronal de génération d'images conditionnées par texte et image.

5. Procédé selon une quelconque revendication précédente, dans lequel les une ou plusieurs propriétés comprennent une composition de couleur de la portion.

6. Procédé selon la revendication 5, lorsqu'il dépend de la revendication 4, dans lequel l'application, à chaque portion de l'image source, d'une ou plusieurs transformations comprend :
l'application d'une transformation de sous-échantillonnage à la portion pour générer une portion sous-échantillonnée ; et
l'application d'une transformation de suréchantillonnage à la portion sous-échantillonnée pour générer une portion ayant la même résolution que la portion de l'image source.

7. Procédé selon une quelconque revendication précédente, dans lequel les une ou plusieurs propriétés comprennent un ou plusieurs (i) d'un masque de segmentation de la portion ; (ii) d'une forme d'un ou plusieurs objets représentés dans la portion ; et (iii) d'une ou plusieurs propriétés d'un ou plusieurs bords représentés dans la portion.

8. Procédé selon une quelconque revendication précédente, dans lequel le traitement d'une image d'entrée comprenant l'image source et les descriptions textuelles respectives de la pluralité de portions comprend, pour chacune des portions :
le traitement d'une entrée de portion comprenant une portion correspondante provenant de l'image source et les une ou plusieurs descriptions textuelles respectives pour la portion à l'aide du réseau neuronal de génération d'images pour générer l'image de fragment respective correspondant à la portion, et de préférence, dans lequel :
(i) l'entrée de portion comprend un ou plusieurs portions supplémentaires provenant de l'image source ; ou
(ii) l'image est un cadre vidéo d'une vidéo et l'entrée de la portion comprend une ou plusieurs portions supplémentaires provenant d'un ou plusieurs autres cadre vidéo respectifs dans la vidéo.

9. Procédé selon la revendication 8, dans lequel le procédé comprend en outre :
l'obtention d'un ou plusieurs paramètres qui caractérisent les propriétés cibles respectives de la photomosaïque, et dans lequel l'entrée de la portion comprend les un ou plusieurs paramètres.

10. Procédé selon l'une quelconque des revendications 1 à 8, dans lequel :
le réseau neuronal de génération d'images conditionnelles au texte est configuré pour traiter l'image d'entrée afin de générer en parallèle la pluralité d'images de fragments de la photomosaïque, et
éventuellement, dans lequel l'image source est un cadre vidéo d'une vidéo et l'image d'entrée comprend un ou plusieurs cadres vidéo supplémentaires dans la vidéo.

11. Procédé selon la revendication 10, dans lequel le procédé comprend en outre :
l'obtention d'un ou plusieurs paramètres qui caractérisent les propriétés cibles respectives de la photomosaïque, et dans lequel l'image d'entrée comprend les un ou plusieurs paramètres.

12. Procédé selon la revendication 9 ou la revendication 11, dans lequel les un ou plusieurs paramètres comprennent un ou plusieurs :
(i) d'un premier paramètre qui spécifie un degré auquel une couleur de chaque image de fragment dans la photomosaïque correspond à une couleur de la zone correspondante dans l'image source ;
(ii) d'un deuxième paramètre qui spécifie un degré auquel un contenu de chacune des images de fragment de la photomosaïque correspond à la description textuelle respective de la portion correspondante et
(iii) d'un troisième paramètre qui spécifie un degré auquel les formes sur chaque image de fragment dans la photomosaïque correspondent aux formes de la portion correspondante dans l'image source.

13. Procédé selon une quelconque revendication précédente, dans lequel le traitement d'une image d'entrée comprenant l'image source et les descriptions textuelles respectives pour la pluralité de portions comprend :
le traitement de l'image d'entrée à l'aide du réseau neuronal de génération d'images conditionnées par texte et image pour générer une photomosaïque initiale dont les images de fragments initiales ont une résolution initiale ; et
l'application d'un modèle d'apprentissage automatique de mise à l'échelle à chaque image de fragment initiale pour générer une image de fragment finale ayant une résolution finale supérieure à la résolution initiale, et,
éventuellement, dans lequel l'image source est un cadre vidéo d'une vidéo et le modèle d'apprentissage automatique de mise à l'échelle est un modèle d'apprentissage automatique de mise à l'échelle vidéo.

14. Système comprenant :
un ou plusieurs ordinateurs ; et
un ou plusieurs dispositifs de stockage stockant des instructions qui, lorsqu'elles sont exécutées par les un ou plusieurs ordinateurs, amènent les un ou plusieurs ordinateurs à réaliser les opérations respectives du procédé selon l'une quelconque des revendications 1 à 13.

15. Un ou plusieurs supports de stockage lisibles par ordinateur stockant des instructions qui lorsqu'elles sont exécutées par un ou plusieurs ordinateurs amènent les un ou plusieurs ordinateurs à réaliser les opérations respectives du procédé selon l'une quelconque des revendications 1 à 13.
